# FASCICULE DE BREVET EUROPEEN

(11) **EP 2 644 031 B1**
(45) Date de publication et mention de la délivrance du brevet: **03.01.2018**
(21) Numéro de dépôt: 13161087.5
(22) Date de dépôt: 26.03.2013
(51) Int. Cl.: A21B 7/00, A21D 8/06

(54) **Procédé de préparation de baguette pour machine a pain**
Verfahren zur Herstellung von Baguette für Brotmaschine
Method for preparing French bread for bread machine

(30) Priorité: 29.03.2012 FR 1252860
(43) Date de publication de la demande: 02.10.2013
(73) Titulaire: SEB S.A., 69130 Ecully (FR)
(72) Inventeur: Blond, Laurent, 21200 BEAUNE (FR)
(74) Mandataire: Cémeli, Eric Philippe Laurent

(56) Documents cités:
- WO-A1-01/78513
- WO-A1-2009/043999
- CN-U- 201 855 152
- DE-U1- 20 021 868
- US-A- 5 426 580
- US-A- 5 510 127
- Schünemann C. & Treu G.: "Technologie der Backwarenherstellung", 2009, Gildebuchverlag GmbH & Co. KG, Alfeld/Leine (DE) ISBN: 978-3-7734-0150-2 page 77-80, 88,

## Description

L'invention concerne le domaine des appareils de cuisson domestique comprenant une enceinte chauffée, et un accessoire de cuisson de pâte à pain ou préparation similaire dans un tel appareil.

La cuisson de pâte à pain est généralement réalisée dans un four, dont l'enceinte peut être chauffée de différentes façons, par électricité, gaz, fuel, charbon, énergie solaire,... La pâte à pain est généralement disposée à même la sole du four et s'étale plus ou moins sur ladite sole pendant la cuisson.

Le document FR2919470 décrit un accessoire de cuisson de pâte à pain permettant de réaliser des baguettes dans une machine à pain. Selon ce document, la machine à pain décrite comprend deux niveaux des éléments chauffants permettant d'assurer une cuisson des baguettes sur les deux niveaux de l'accessoire de cuisson.

Ainsi, selon l'art antérieur l'utilisation de l'accessoire nécessite l'utilisation d'une machine à pain bénéficiant d'une puissance électrique importante de l'ordre de 1500W.

Le document WO01/78513 décrit un accessoire de cuisson de pâte à pain permettant de réaliser des baguettes dans une machine à pain. Selon ce document, la machine à pain décrite comprend un seul élément chauffant.

Le but de l'invention est de proposer un procédé de cuisson de baguette pour machine à pain de faible puissance.

Ce but est atteint à l'aide d'un procédé de préparation de pâton de pâte à pain dans une machine à pain comprenant un espace de cuisson susceptible de recevoir d'une part, une cuve de cuisson et d'autre part au moins un support de cuisson de pâton de pâte à pain, l'espace de cuisson comprend un seul élément chauffant assurant à lui seul la cuisson, le procédé comprenant :
- une étape de pétrissage dans la cuve de cuisson,
- une étape de levée de pâte dans l'espace de cuisson,
- une étape de façonnage manuel de pâton(s) de pâte à l'extérieur de la machine à pain,
le procédé étant caractérisé en qu'il comporte :
- une étape de levée du ou des pâtons de pâte dans le support placé dans l'espace de cuisson d'une durée comprise entre 20 et 30 min,
- une étape de cuisson des pâtons de pâte dans le support placé dans l'espace de cuisson d'une durée
de l'ordre de 40min.

Selon un autre mode de réalisation, l'étape de pétrissage comprend au moins une phase de pétrissage continu et au moins une étape de pétrissage par intermittence.

L'invention concerne également une machine à pain comprenant un espace de cuisson susceptible de recevoir d'une part, une cuve de cuisson et d'autre part au moins un support de cuisson de pâton de pâte à pain, l'espace de cuisson comprend un seul élément chauffant assurant à lui seul la cuisson caractérisée en ce que la machine à pain comprend une unité de commande spécialement conçue pour mettre en oeuvre le procédé selon l'invention.

Selon une autre variante de réalisation, la puissance électrique de l'élément chauffant est comprise entre 500 et 700W.

D'autres caractéristiques et avantages de l'invention se dégageront de la description qui va suivre en regard des dessins annexés qui ne sont donnés qu'à titre d'exemples non limitatifs.
La figure 1 est une vue en perspective d'un accessoire de cuisson de pâte à pain équipé de deux supports de cuisson selon l'art antérieur.
La figure 2 présente une vue en perspective avant d'une machine à pain selon l'invention.

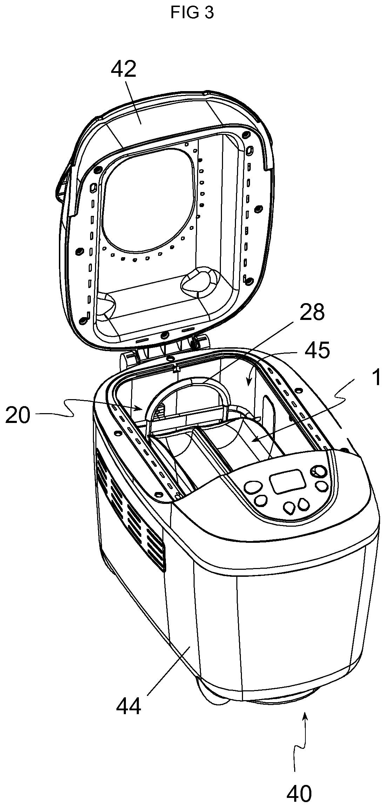

La figure 3 est une vue en perspective avant d'une machine à pain selon l'invention, l'appareil étant équipé, d'un accessoire de cuisson comportant les supports de cuisson.

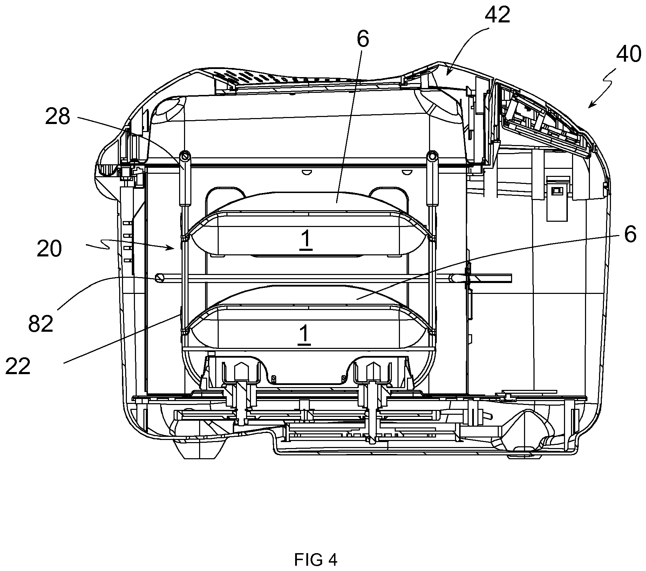

La figure 4 présente une coupe longitudinale de l'appareil équipé de la cuve de préparation et de cuisson.

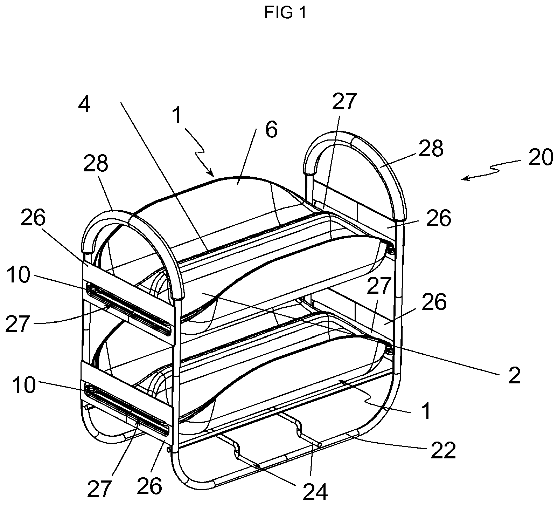

A titre d'exemple non limitatif, un accessoire pour support 1 de pâtons de pain pour leur cuisson dans une machine à pain, conforme à celui décrit dans le document FR2919470, est utilisé pour mettre en oeuvre le procédé selon l'invention. En référence à la figure 1, un tel support 1 comprend deux empreintes 2 de forme allongée, disposées côte à côte selon leur longueur, séparées l'une de l'autre par un rebord 4. Les empreintes présentent une section transversale sensiblement en demi-cercle, de valeur légèrement inférieure à la profondeur des empreintes, prise par rapport au niveau constitué par le rebord 4. Par ailleurs, les extrémités des empreintes sont également de section longitudinale en arc de cercle, de rayon sensiblement identique au rayon de la section transversale des empreintes. Selon l'exemple proposé, la longueur est voisine de 180 mm, pour une largeur de l'ordre de 60 mm. La profondeur est de l'ordre de 35 mm, et le rayon de la section des empreintes est voisin de 25 mm.

Chaque support 1 comprend un prolongement vertical ou paroi 6 des bords latéraux du support. Cette paroi 6 fait notamment office d'écran thermique lors de la cuisson, tel qu'il sera expliqué ultérieurement.

L'accessoire pour support se compose de deux tiges métalliques 22 parallèles, en forme de U vertical, reliées entre elles, d'une part par des tiges 24 horizontales en partie basse, et d'autre part à l'aide de plaques métalliques 26 verticales, reliant les branches verticales des tiges 22. Les liaisons entre les tiges et les plaques sont réalisées par soudage, mais d'autres techniques d'assemblage mécanique peuvent également être utilisées, en variante de réalisation. Les plaques métalliques 26 présentant des fentes 27 sensiblement horizontales, dans lesquelles peuvent venir se positionner les bords latéraux 10 des supports. Deux poignées 28 en liaison avec les extrémités des parties verticales des tiges 22 facilitent cette opération, et permettent également une manipulation aisée de l'accessoire.

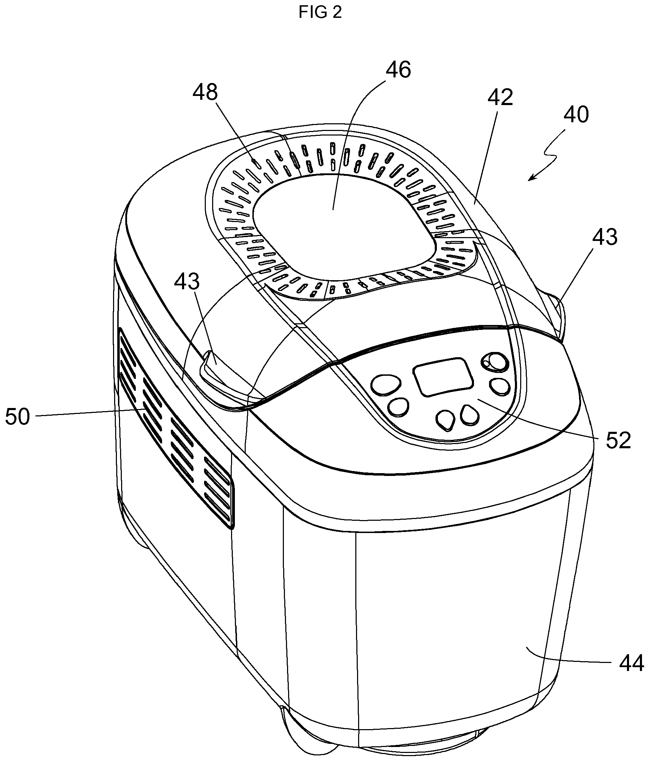

Un tel accessoire est utilisé dans une machine à pain 40, telle que présentée à la figure 2. Cet appareil comporte ainsi un couvercle 42 articulé en rotation sur un corps 44, le couvercle, manipulable par des poignées 43, étant équipé d'un hublot 46 de visualisation ainsi que d'ouïes 48 périphériques au hublot, les ouïes permettant une circulation d'air et l'échappement des vapeurs de cuisson. D'autres ouïes 50 de circulation d'air sont disposées sur les bords latéraux du corps 44 de l'appareil.

En face avant de l'appareil se trouve un panneau de commande, tel qu'il est connu dans de tels appareils. Certains, parmi les boutons sont utilisés pour ajuster les différents paramètres influant sur la cuisson (poids, degré de dorage souhaité notamment).

Selon l'invention, l'appareil comporte un programme spécifique, dénommé par la suite programme « baguette », qui permet l'utilisation de l'accessoire tel qu'il sera expliqué ultérieurement.

L'intérieur de l'appareil comprend un espace de préparation et de cuisson 45 de forme parallélépipédique, tel qu'il est connu dans ce genre d'appareil, cet espace étant accessible après l'ouverture du couvercle 42. Cet espace 45 est généralement occupé par une cuve de cuisson (non représentée). Selon l'invention, un seul élément chauffant 82, de type éléments chauffants blindés, est disposé en périphérie intérieure du logement de la cuve. Selon l'invention, l'unique élément chauffant est disposé à mi-hauteur de l'espace de cuisson 45. Par ailleurs, la puissance électrique délivrée par l'élément chauffant 82 est par exemple de l'ordre de 600W.

Plus précisément, lorsque l'accessoire 20, équipé d'un ou de deux supports 1, est disposé dans l'espace de cuisson 45, l'élément chauffant 82 est situé entre les deux supports 1, c'est-à-dire sensiblement à mi-hauteur de l'accessoire 20. Les deux tiges 22 reposent alors sur le fond horizontal délimitant l'espace 45 de préparation et de cuisson de l'appareil.

En fonctionnement, lorsque l'utilisateur désire confectionner du pain à l'aide de l'accessoire 20 tel que présenté, il dispose tout d'abord la cuve de cuisson (non représentée) et les ingrédients adéquats dans l'appareil et referme le couvercle. Il sélectionne ensuite, avec les boutons du panneau de commande 52, le programme « baguette ». L'utilisateur démarre ensuite les différents cycles de pétrissage et de levée de la pâte en appuyant sur une touche déterminée du panneau de commande 52.

Lorsque les différents cycles de pétrissage et de levée de la pâte sont terminés, l'appareil signale la fin de la préparation de la pâte par des bips sonores en association ou non avec des indications lumineuses, et se met en attente.

L'utilisateur doit alors sortir la cuve de cuisson de l'appareil et séparer la pâte en différents pâtons, à l'aide ou non d'une balance, pâtons, dont le poids est de l'ordre de 125 g, qu'il dispose ensuite dans les empreintes des supports 1 qu'il positionne alors sur l'accessoire 20.

Cet accessoire est ensuite placé dans l'appareil, à la place de la cuve de cuisson, dans l'espace 45. L'utilisateur, après avoir refermé le couvercle, signale à l'appareil que le cycle de préparation peut débuter, par l'appui sur une touche déterminée du panneau de commande 52. D'autres moyens peuvent être envisagés pour débuter le cycle de cuisson, par exemple par une détection de présence de l'accessoire et de fermeture du couvercle. Le cycle de cuisson débute par une phase de levée de la pâte suivie d'une phase de cuisson.

L'élément chauffant 82 étant disposé en périphérie de l'espace de cuisson, ce dernier est chauffé par convection et rayonnement. Le dorage des pâtons est assuré par rayonnement direct pour les pâtons inférieurs, et par rayonnement indirect pour les pâtons supérieurs.

Il est important de constater que la structure filaire de l'accessoire laisse considérablement de place à la circulation d'air, favorisant ainsi les échanges et l'homogénéisation de la cuisson du pain.

Par ailleurs, l'utilisation d'un seul élément chauffant nécessite d'adapter le fonctionnement de la machine à pain. En effet, la demanderesse a constaté que si les paramètres de fonctionnement ne sont pas adaptés, les résultats de cuisson et organoleptiques des pâtons ne sont pas satisfaisants.

Notamment, la faible puissance électrique disponible avec un seul l'élément chauffant 82 pour la cuisson tendrait naturellement à augmenter la durée de cuisson pour obtenir un résultat équivalant à celui obtenu avec 2 éléments chauffants. Toutefois, les essais réalisés par la demanderesse montrent que cette augmentation de la durée entraine une formation d'une croute épaisse sur les pâtons.

Selon l'invention, le procédé de préparation des « baguettes » dans une machine à pain ne comprenant qu'un seul élément chauffant comprend :
- Une étape de pétrissage dans la cuve de cuisson de la machine à pain ;
- Une étape de levée de la pâte dans la cuve de cuisson de la machine à pain ;
- Une étape de façonnage manuel de pâtons de pâte à l'extérieur de la machine pain ;
- Une étape de levée des pâtons de pâte dont la durée est comprise entre 20 et 30 min ;
- Une étape de cuisson des pâtons dont la durée est de l'ordre de 40 min. L'étape de levée du ou des pâtons et l'étape de cuisson sont réalisées dans l'espace de cuisson en disposant les pâtons sur les supports 1. Les supports sont par exemple installés sur l'accessoire.

L'augmentation de la durée de l'étape de levée des pâtons permet un développement plus important des pâtons et contre toute attente, ceci favorise la cuisson des pâtons.

Ainsi, puisque la durée de cuisson proprement dite n'est pas augmentée, il n'y a pas de formation d'une croute épaisse sur les pâtons. La combinaison de ces deux phénomènes permet ainsi de réaliser des baguettes dans une machine à pain de faible puissance et/ou n'étant équipée que d'un seul élément chauffant. Lors de l'étape de pétrissage, de l'étape de levée de la pâte et de l'étape de levée du pâton, l'élément chauffant 82 est mis en oeuvre pour maintenir une température dans l'espace de cuisson comprise entre 35° et 40°.

De préférence la durée de l'étape de levée des pâtons se situe autour de 25min.

Lors de la phase de cuisson, la température de cuisson est régulée à une température comprise entre 150 et 200°. La durée de cuisson est de l'ordre de 40min. Avant le démarrage d'un cycle de préparation et de cuisson, l'utilisateur peut modifier de quelques minutes (par exemple, au maximum 5) le temps de préparation par l'intermédiaire d'une touche déterminée du panneau de commande 52 de la machine à pain.

Selon un autre mode de réalisation du procédé selon l'invention, l'étape de pétrissage comprend 3 périodes durant lesquelles la pâle de pétrissage est mise en oeuvre soit de façon continue, soit par intermittence. L'accessoire de support peut être remplacé par des rails formés sur la paroi intérieure de la cuve de cuisson. La géométrie et la position des rails sont adaptées pour recevoir les supports.

## Revendications

1. Procédé de préparation de pâton de pâte à pain dans une machine à pain (40) comprenant un espace de cuisson (45) susceptible de recevoir d'une part, une cuve de cuisson et d'autre part au moins un support (1) de cuisson de pâton de pâte à pain, l'espace de cuisson (45) comprend un seul élément chauffant assurant à lui seul la cuisson, le procédé comprenant
- une étape de pétrissage dans la cuve de cuisson,
- une étape de levée de pâte dans l'espace de cuisson (45),
- une étape de façonnage manuel de pâton(s) de pâte à l'extérieur de la machine à pain (40),
le procédé étant caractérisé en qu'il comporte :
- une étape de levée du ou des pâtons de pâte dans le support (1) placé dans l'espace de cuisson (45) d'une durée comprise entre 20 et 30 min,
- une étape de cuisson des pâtons de pâte dans le support placé dans l'espace de cuisson d'une durée de l'ordre de 40 min.

2. Procédé de préparation de pâton de pâte à pain dans une machine à pain selon la revendication précédente **caractérisé en ce que** l'étape de pétrissage comprend au moins une phase de pétrissage continu et au moins une étape de pétrissage par intermittence.

3. Machine à pain (40) comprenant un espace de cuisson (45) susceptible de recevoir d'une part, une cuve de cuisson et d'autre part au moins un support (1) de cuisson de pâton de pâte à pain, l'espace de cuisson (45) comprend un seul élément chauffant assurant à lui seul la cuisson **caractérisée en ce que** la machine à pain comprend une unité de commande spécialement conçue pour mettre en oeuvre le procédé selon l'une des revendications précédentes.

4. Machine à pain (40) selon la revendication précédente **caractérisée en ce que** la puissance électrique de l'élément chauffant est comprise entre 500 et 700W.

## Patentansprüche

1. Verfahren zur Zubereitung von Teiglingen aus Brotteig in einer Brotbackmaschine (40), die eine Backkammer (45) umfasst, die geeignet ist, einerseits ein Backgefäß und andererseits mindestens einen Träger (1) zum Backen von Teiglingen aus Brotteig aufzunehmen, wobei die Backkammer (45) ein einzelnes Heizelement umfasst, das allein das Backen gewährleistet, wobei das Verfahren umfasst
- einen Knetschritt in dem Backgefäß,
- einen Aufgehschritt in der Backkammer (45),
- ein manuellen Teigformungsschritt von Teigling(en) aus Teig außerhalb der Brotbackmaschine (40),
wobei das Verfahren **dadurch gekennzeichnet ist, dass** es umfasst:
- einen Aufgehschritt des oder der Teiglinge aus Teig in dem Träger (1), der in der Backkammer (45) platziert ist, mit einer Dauer, die zwischen 20 und 30 min. liegt,
- einen Schritt zum Backen von Teiglingen aus Teig in dem Träger, der in der Backkammer platziert ist, mit einer Dauer von ungefähr 40 min..

2. Verfahren zur Zubereitung von Teiglingen aus Brotteig in einer Brotbackmaschine nach dem vorhergehenden Anspruch, **dadurch gekennzeichnet, dass** der Knetschritt mindestens eine kontinuierliche Knetphase und mindestens einen zeitweiligen Knetschritt umfasst.

3. Brotbackmaschine (40), die eine Backkammer (45) umfasst, die geeignet ist, einerseits ein Backgefäß und andererseits mindestens einen Träger (1) zum Backen von Teiglingen aus Brotteig aufzunehmen, wobei die Backkammer (45) ein einzelnes Heizelement umfasst, das allein das Backen gewährleistet, **dadurch gekennzeichnet, dass** die Brotbackmaschine eine Steuereinheit umfasst, die speziell ausgelegt ist, das Verfahren nach einem der vorhergehenden Ansprüche umzusetzen.

4. Brotbackmaschine (40) nach dem vorhergehenden Anspruch, **dadurch gekennzeichnet, dass** die elektrische Leistung des Heizelements zwischen 500 und 700 W liegt.

## Claims

1. Method for preparing piece of bread dough in a bread machine (40) comprising a cooking space (45) likely to receive, on the one hand, a cooking vessel, and on the other hand, at least one piece of bread dough cooking support (1), the cooking space (45) comprises one single heating element ensuring the cooking thereof, the method comprising
- a step for kneading in the cooking vessel,
- a step for raising dough in the cooking vessel (45),
- a step for manually shaping piece of bread dough outside of the bread machine (40),
the method being **characterised in that** it comprises:
- a step for letting the piece of bread dough rise in the support (1) positioned in the cooking space (45) for a duration of between 20 minutes and 30 minutes,
- a step for cooking the piece of bread dough in the support positioned in the cooking space for a duration of around 40 minutes.

2. Method for preparing piece of bread dough in a bread machine according to the preceding claim, **characterised in that** the kneading step comprises at least one continuous kneading phase and at least one intermittent kneading step.

3. Bread machine (40) comprising a cooking space (45) likely to receive, on the one hand, a cooking vessel, and on the other hand, at least one piece of bread dough cooking support (1), the cooking space (45) comprises one single heating element ensuring the cooking thereof, **characterised in that** the bread machine comprises a control unit particularly designed to implement the method according to one of the preceding claims.

4. Bread machine (40) according to the preceding claim, **characterised in that** the electric power of the heating element is between 500W and 700W.
